# EUROPÄISCHE PATENTSCHRIFT

(11) **EP 0 912 426 B1**
(45) Veröffentlichungstag und Bekanntmachung des Hinweises auf die Patenterteilung: **09.08.2000**
(21) Anmeldenummer: 97917977.7
(22) Anmeldetag: 09.05.1997
(51) Int. Cl.: B65G 17/32, B65G 47/31

(54) **VERFAHREN ZUR HÄNGENDEN FÖRDERUNG VON BEHÄLTERN UND VORRICHTUNG ZUR DURCHFÜHRUNG DES VERFAHRENS**
METHOD FOR THE SUSPENDED CONVEYING OF CONTAINERS AND DEVICE FOR CARRYING OUT SAID METHOD
PROCEDE DE TRANSPORT SUSPENDU DE RECIPIENTS ET DISPOSITIF APPROPRIE POUR METTRE LEDIT PROCEDE EN OEUVRE

(30) Priorität: 13.05.1996 CH 121796
(43) Veröffentlichungstag der Anmeldung: 06.05.1999
(73) Patentinhaber: IPT Weinfelden AG, 8570 Weinfelden (CH)
(72) Erfinder: MÜLLER, Thomas, CH-8570 Weinfelden (CH); KÜNZLER, Ernst, CH-8570 Weinfelden (CH)
(74) Vertreter: Frei, Alexandra Sarah
(86) Internationale Anmeldenummer: CH9700180
(87) Internationale Veröffentlichungsnummer: WO9743197

(56) Entgegenhaltungen:
- EP-A- 0 005 402
- US-A- 3 944 058
- US-A- 3 951 285

## Beschreibung

Die Erfindung liegt auf dem Gebiete der Fördertechnik und betrifft ein Förderverfahren nach dem Oberbegriff des ersten, unabhängigen Patentanspruchs und eine Vorrichtung zur Durchführung des Verfahrens. Das erfindungsgemässe Verfahren und die Vorrichtung zu seiner Durchführung dienen zur hängenden Förderung von Behältern, welche Behälter einen definierten Boden aufweisen, auf dem sie frei stehen können, und einen dem Boden gegenüberliegenden Öffnungsbereich insbesondere ausgestaltet als Hals- und Kopfbereich, wobei der Querschnitt des Halsbereiches kleiner ist als der Querschnitt des Kopfbereiches. Derartige Behälter sind beispielsweise Flaschen, wie sie aus Glas oder Kunststoff für Getränke und andere flüssige Materialien im Detail- und im Grosshandel üblich sind.

Flaschen und ähnliche Behälter nach der oben genannten Definition werden in ihrem vollen und geschlossenen Zustand meist stehend gefördert und zwar mit Hilfe von Förderbahnen, die üblicherweise aus einer Folge von Förderelementen bestehen. Diese Förderelemente werden beispielsweise mit Hilfe einer Kette, an der sie befestigt sind, entlang einer Förderstrecke bewegt. Die frei stehende Position der geförderten Flaschen auf den Förderbahnen verunmöglicht aber namhafte Steigungen in derartigen Förderstrecken, sodass diese sich üblicherweise etwa auf Arbeitshöhe und im wesentlichen horizontal durch die Fabrikations- oder Abfüllräume erstrecken und darin beträchtliche Hindernisse für die Zufahrt zu Verarbeitungsstationen und für den Personenverkehr darstellen.

Ein weiterer Nachteil der oben beschriebenen Förderbahnen besteht darin, dass die Flaschen durch seitliche Führungen zwar in einer geordneten Einerkolonne gehalten werden können, dass aber in einer derartigen Kolonne die Abstände in Förderrichtung kaum genau beibehaltbar sind. Insbesondere beim Aufstellen der Flaschen auf eine derartige Förderbahn, bei Übergängen von einer Förderbahn auf eine nächste, wobei gegebenenfalls die Fördergeschwindigkeit sich ändert, kann es zu Stauungen und zu gegenseitigem Schieben der Flaschen kommen.

Sowohl bei der seitlichen Führung als auch bei den genannten Stauungen berühren sich die Flaschen und reiben gegeneinander. Dies ist in vielen Fällen nicht erwünscht, insbesondere für Flaschen, die aufgeklebte Etiketten haben, und speziell unmittelbar nach dem Aufkleben der Etiketten.

Um den Nachteilen der genannten Fördermethoden für die Förderung von Behältern auf Förderbändern oder Förderbahnen entgegen zu wirken, sind auch Förderverfahren entwickelt worden, in denen die Behälter mindestens bereichsweise einzeln von je einem Greifer gehalten in einer hängenden Position gefördert werden. Diese Greifer sind in gleichmässigen Abständen an Transportketten befestigt. Für die Übernahme der Behälter durch die Greifer werden Behälter und Greifer kontinuierlich und absolut synchron gefördert. Während dieser synchronen Förderung macht jeder Greifer einen Hub quer zur Förderrichtung und senkt sich von oben auf den zu ergreifenden Behälter ab (z.B. wie beschrieben in US-A-3944058) oder nähert sich von der Seite dem zu ergreifenden Behälter (z.B. wie beschrieben in US-A-3590982). Am Ende des Hubes ist der Greifer in einer Position in der er zumErgreifen des Behälters geschlossen werden kann.

Aus der US-A-3,951,285 ist eine Anordnung bekannt, die zum Entladen von mit aufrecht stehenden Flaschen gefüllten Kisten dient. Die auf einem Förderband mit einer konstanten Geschwindigkeit geförderten und mit Flaschen gefüllten Kisten werden durch Greifer entleert, die an einem weiteren Fördermittel gelenkig befestigte sind und hängend umlaufen. Diese in Förderrichtung eng beabstandet angeordneten Greifer weisen im Aufnahmebereich eine auf die Flaschen abgestimmte Fördergeschwindigkeit auf und sind so ausgestaltet, dass sie die Flaschen durch einen Hub quer zur Förderrichtung und senkrecht von oben ergreifen.

Zum Umsetzen von Behältern von einem Fördermittel auf ein nächstes Fördermittel, welche Fördermittel beispielsweise lineare Förderbänder und/oder Karussell-ähnliche Vorrichtungen sind, sind auch Umsetzungs-Karussels bekannt, die mit sich in einem im wesentlichen horizontalen Kreise drehenden Greifern ausgerüstet sind (z.B. beschrieben in EP-A-0005402 oder DE-A-19512515). Der Kreis, auf dem die Greifer sich bewegen, ist derart angeordnet, dass er mit dem Fördermittel, von dem die Behälter zu übernehmen sind, und mit dem Fördermittel, an das die Behälter abzugeben sind, an einer Übernahmestelle bzw. an einer Übergabestelle eine gemeinsame Tangente hat Die Übernahme bzw. Übergabe mit derartigen Umsetz-Karussells erfordert keinen Greiferhub, wie er oben beschrieben ist.

Die Erfindung stellt sich nun die Aufgabe, ein Verfahren aufzuzeigen, mit dem Behälter mit einem definierten Boden und einem dem Boden im wesentlichen gegenüberliegenden Öffungungsbereich (mit offener oder geschlossener Öffnung) von individuellen Haltemitteln übernehmbar, durch diese Haltemittel hängend gehalten über in weitesten Grenzen beliebig im Raume angeordnete Förderstrecken kontinuierlich förderbar und am Ende der Förderstrecke wieder abgebbar sind Die Übernahme der Behälter durch die Haltemittel soll eine fliegende sein, das heisst ohne Unterbruch einer kontinuierlichen Behälterförderung durchführbar sein. Die Abgabe der Behälter von den Haltemitteln soll einfach an verschiedenste Erfordernisse anpassbar sein. Für das ganze Verfahren soll es einfach möglich sein, eine der stehenden Position der Behälter entsprechende hängende Position beizubehalten, unabhängig vom Verlauf der Förderstrecke.

Ferner ist es die Aufgabe der Erfindung, eine Vorrichtung zur Durchführung des Verfahrens zu schaffen. Diese Vorrichtung soll einfach und platzsparend sein und soll sowohl investitionsmässig als auch betriebsmässig nicht aufwendiger sein als bekannte Vorrichtungen, wie sie eingangs erwähnt worden sind. Ferner soll die erfindungsgemässe Vorrichtung einfach an verschiedene Formen und Grössen der zu fördernden Behälter, also beispielsweise an verschiedene Flaschengrössen anpassbar sein.

Diese Aufgabe wird gelöst durch das Verfahren und die Vorrichtung, wie sie in den Patentansprüchen definiert sind.

Für die Übernahme gemäss erfindungsgemässem Verfahren werden die zu fördernden Behälter in Form eines ausgerichteten, kontinuierlichen Behälterstromes auf einer Behälter-Zuförderstrecke einem Übernahme bereich zugefördert, derart, dass sie mit einer vorgegebenen Zufördergeschwindigkeit und mit vorgegebenen, regelmässigen Abständen in den Übernahmebereich eintreten. Die Behälter haben dabei eine stehende Position und die Förderkraft greift in ihrem Bodenbereich an.

Dem Übernahmebereich werden ferner von oben entlang einer gekrümmten Bahn, die am Ende des Übernahmebereiches tangential in die Zuförder-Strecke einmündet, äquidistant aufeinanderfolgende, individuelle Haltemittel zugefördert und je zwischen den Behältern in den Behälterstrom eingeführt. Die Haltemittel haben am Anfang dieser Einführung eine Geschwindigkeit, die sich von der Behältergeschwindigkeit unterscheidet, und werden während der Einführung in den Behälterstrom auf die Behältergeschwindigkeit verzögert bzw. beschleunigt, das heisst, Behälter und Haltemittel werden über den Übernahmebereich bezüglich Geschwindigkeit asynchron gefördert. Dabei ist die Behälterförderung und die Förderung der Haltemittel derart aufeinander abgestimmt, dass jedes Haltemittel dann die Behältergeschwindigkeit erreicht hat, wenn es den vorlaufenden bzw. nachlaufenden Behälter umfahren hat, das heisst relativ zu diesem Behälter in eine mindestens potentielle Halteposition gebracht ist (Ende des Übernahmebereichs).

Gegebenenfalls werden die Behälter vor der Zuförderung zum Übernahmebereich ausgerichtet und auf die vorgegebene Zufördergeschwindigkeit gebracht, wobei gleichzeitig ihr Abstand vergleichmässigt wird (Eintaktung).

Gegebenenfalls werden am Ende des Übernahmebereichs oder danach Haltemittelteile relativ zueinander bewegt, um das Halten des Behälters zu sichern.

Für die Förderung werden die von je einem Haltemittel hängend gehaltenen Behälter aus dem Übernahmebereich und über eine sich beliebig im Raum erstreckende Förderstrecke gefördert, wobei die Lage des Haltemittels relativ zur Lage der Förderstrecke derart variierbar ist, dass die der stehenden Position entsprechende Position des Behälters beibehaltbar ist.

Am Ende der Förderstrecke werden die Behälter in einem Übergabebereich von den Haltemitteln getrennt und Behälter und Haltemittel werden auf separaten Wegförderstrecken weggefördert. Für die Trennung von Behältern und Haltemitteln sind je nach Ausgestaltung der Haltemittel und der Behälter verschiedene Varianten möglich, die im Folgenden noch genauer beschrieben werden sollen.

Es können auch mehrere, parallel verlaufende Behälter-Zuförderstrecken vorgesehen sein, wobei dann die Haltemittel derart ausgerüstet sind, dass sie eine Mehrzahl von parallel geförderten Behältern zu ergreifen und zu halten vermögen. Es ist auch denkbar, mehr Haltemittel als Behälter in den Übernahmebereich zu fördern, derart, dass nur jedes n-te Haltemittel auf einen Behälter trifft. Es können auch mehrere, beispielsweise entlang der Behälter-Zuförderstrecke aufeinanderfolgende Übernahmebereiche bzw. Übergabebereiche vorgesehen werden, wobei in jedem Übernahmebereich bzw. Übergabebereich in einer regelmässigen Sequenz (beispielsweise jeder dritte Behälter) oder nach Bedarf gesteuert Behälter von Haltemitteln übernommen bzw. freigegeben werden.

Die erfindungsgemässe Vorrichtung weist im wesentlichen die folgenden Bestandteile auf:
- eine Mehrzahl von gegenüber einer Förderstrecke verschwenkbaren Haltemitteln und ein geeignetes Transportmittel, mit dem die Haltemittel äquidistant und mit einer Geschwindigkeit, die grösser oder kleiner ist als die Behältergeschwindigkeit, auf einer gekrümmten Bahn von oben in den Übernahmebereich förderbar, im Übernahmebereich auf die Behältergeschwindigkeit verzögerbar bzw. beschleunigbar und über die Förderstrecke und durch den Übergabebereich förderbar sind; beispielsweise eine Transportkette mit gelenkig und derart davon beabstandet angeordneten Haltemitteln, dass diese auf einem gekrümmten Bahnteil eine grössere Geschwindigkeit aufweisen als die Kette selbst;
- ein auf den Bodenbereich der zu fördernden Behälter wirkendes Behälter-Zufördermittel, mit dem die Behälter in einer im wesentlichen stehenden Position auf einer Behälter-Zuförderstrecke dem Übernahmebereich zugefördert werden; beispielsweise ein Förderband;
- gegebenenfalls Steuermittel für eine Relativbewegung einzelner Haltemittelteile, womit diese in eine gesicherte Haltestellung und/oder in eine spezielle Übernahme- bzw. Übergabestellung (Freigabestellung) bringbar sind; beispielsweise stationäre Kulissen, die mindestens im Übernahme' und/oder Übergabebereich angeordnet sind.
- gegebenenfalls Ausrichtmittel zur Ausrichtung (seitlich und/oder in der Höhe) der Behälter und Eintaktmittel zur Einstellung der vorgegebenen Behälterabstände und der vorgegebenen Zufördergeschwindigkeit für die Zuförderung der Behälter zum Übernahmebereich; beispielsweise eine am Kopfbereich der Behälter angreifende Eintaktschraube oder auf den Bodenbereich der Behälter wirkende Brems- oder Beschleunigungsnokken;
- gegebenenfalls ein weiteres Fördermittel zum Wegfördern der Behälter vom Übergabebereich auf einer Behälter-Wegförderstrecke; beispielsweise ein weiteres Förderband.

Die speziellen Vorteile des erfindungsgemässen Verfahrens und der Vorrichtung zur Durchführung des Verfahrens sind ihre Einfachheit (kein Hub der Haltemittel bei Übernahme und Übergabe) und die Raumersparnis (Einführung der Haltemittel in den Behälterstrom von oben). Durch das Vermeiden des Haltemittel-Hubes werden auch ungünstige Kräfteverhältnisse auf das Transportmittel (z.B. Transportkette) vermieden.

Anhand der folgenden Figuren sollen nun das erfindungsgemässe Verfahren und die Vorrichtung zu seiner Durchführung anhand von verschiedenen, beispielhaften Ausführungsformen mehr im Detail beschrieben werden. Dabei zeigen:
- **Figuren 1 und 2**: zwei beispielhafte Varianten des erfindungsgemässen Verfahrens dargestellt am Beispiel der Förderung von Flaschen;
- **Figuren 3 und 4**: eine einfache, beispielhafte Ausführungsform eines Haltemittels (ohne Verbindung zu einem Transportmittel), als Draufsicht von unten (Figur 3) und im Schnitt (Figur 4);
- **Figuren 5 und 6**: eine weitere, beispielhafte Ausführungsform eines Haltemittels (ohne Verbindung zu einem Transportmittel) als Draufsicht von unten in Übernahme/Übergabestellung (Figur 5) und in Halte/Sicherungsstellung (Figur 6);
- **Figuren 7 und 8**: eine beispielhafte Ausführungsform einer gelenkigen Verbindung zwischen Haltemittel und Transportmittel als Seitenansicht senkrecht zur Förderrichtung (Figur 7) und im Schnitt senkrecht zur Förderrichtung (Figur 8);
- **Figur 9**: eine beispielhafte Ausführungsform der erfindungsgemässen Vorrichtung für die Durchführung des Verfahrens gemäss Figur 1 im Bereiche der Zuförderung und der Übernahme (Eintaktmittel, Behälter-Zufördermittel und Haltemittel-Zuförderung);
- **Figur 10**: die Verstellbarkeit der Vorrichtung gemäss Figur 9 für die Förderung verschieden hoher Behälter;
- **Figur 11**: eine weitere, beispielhafte Ausführungsform der erfindungsgemässen Vorrichtung im Zuförder- und Übernahmebereich.

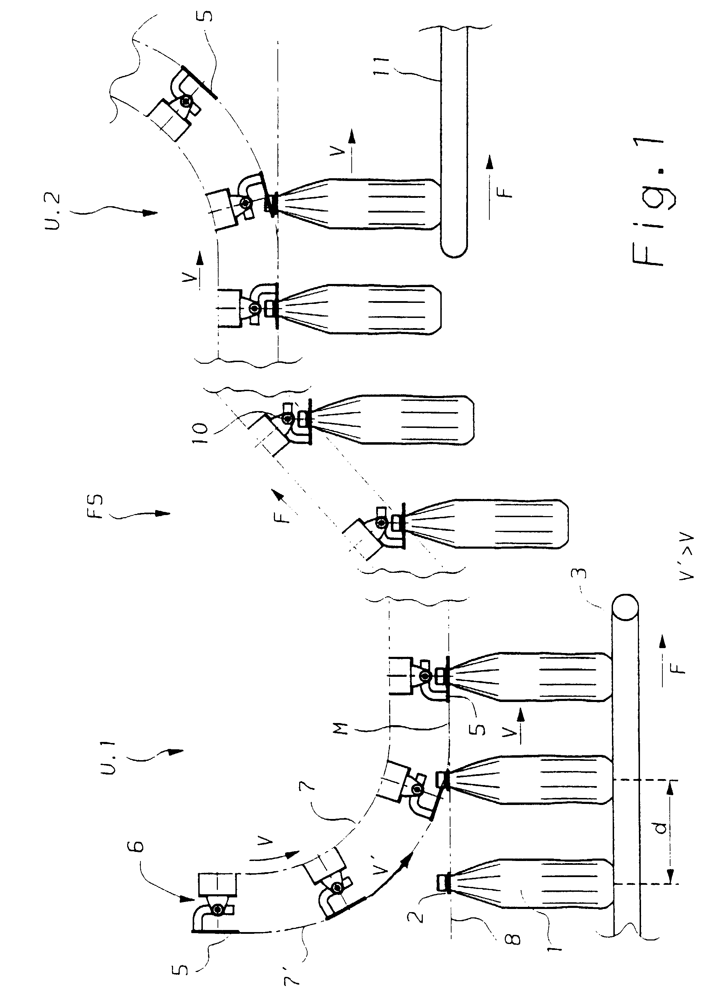

**Figur 1** zeigt von einer ersten Variante des erfindungsgemässen Verfahrens den Übernahmebereich U.1, ein kurzes Stück der Förderstrecke FS und den Übergabebereich U.2. Die Förderrichtung ist allgemein mit Pfeilen F bezeichnet. Die zu fördernden Behälter 1 sind im dargestellten Falle Flaschen mit einem Kragen 2 unterhalb der Öffnung bzw. unterhalb des Verschlusses, welcher Kragen 2 den grössten Durchmesser des Öffnungsbereichs aufweist, sodass die Flaschen in ihrem Halsbereich unter dem Kragen für eine hängende Förderung einfach gehalten werden können.

Die Behälter werden dem Übernahmebereich U.1 mit der Geschwindigkeit v und mit dem Abstand d voneinander zugefördert, beispielsweise mittels Förderband 3.

Die Haltemittel 5 sind mittels Verbindungen 6 mit einem Transportmittel wirkverbunden und werden durch dieses auf einer Bahn 7' bewegt. Das Transportmittel ist schematisch als strichpunktierte Linie 7 dargestellt Es kann sich dabei beispielsweise um eine in einer entsprechenden Führung laufende Transportkette handeln, an der die Haltemittel 5 mittels Verbindungen 6 derart beabstandet befestigt sind, dass sie auf einem gekrümmten Bahnbereich einen grösseren Bahnradius zu durchlaufen haben, wodurch ihre Geschwindigkeit grösser wird als die Geschwindigkeit des Transportmittels.

Das Transportmittel wird mit einer gleichen Geschwindigkeit v angetrieben wie das Förderband 3, die Haltemittel 5 haben im gekrümmten Bahnbereich, auf dem sie in die Übernahmestelle U.1 geführt werden, eine Geschwindigkeit v', die grösser ist als v. Am Ende des Übernahmebereichs mündet die Bahn 7' der Haltemittel 5 tangential in die Behälter-Zuförderstrecke, die im wesentlichen geradlinig ist und die auf der Höhe der Behälter, auf der sie durch die Haltemittel ergriffen werden, ebenfalls mit einer strichpunktierten Linie 8 dargestellt ist. Von diesem Mündungspunkt M an ist die Geschwindigkeit der Haltemittel gleich v. Die Synchronisation zwischen Behälter-Zuförderung und Haltemittel-Zuförderung ist derart einzurichten, dass am Ende des Übernahmebereiches, also am Mündungspunkt M der Haltemittel-Bahn 7' in die Bahn 8 der Behälter, jedes Haltemittel den vorlaufenden Behälter eingeholt hat und ihn in dessen Halsbereich umfasst, wie dies in der Figur 1 für das Haltemittel, das den Mündungspunkt M eben durchlaufen hat, dargestellt ist. Die Umfassung des Halsbereiches durch das Haltemittel 5 ist dabei enger als der Kragen, sodass der Behälter, wenn er das Zufördermittel 3 verlässt durch das Haltemittel hängend weiter gefördert wird.

Damit auf der Förderstrecke FS Steigungen überwindbar sind, ohne dass die aufrechte Lage der geförderten Behälter aufgegeben werden muss, weisen die Verbindungen 6 Gelenke 10 auf. Für eine Beibehaltung der aufrechten Lage wird das Gelenk freigegeben, für andere Förderweisen kann es auch in einer bestimmten Position blockiert werden.

Im Übergabebereich U.2 werden die Behälter 1 beispielsweise auf ein Förderband 11 zum Wegfördern der Behälter übergeben und werden die Haltemittel 5 wiederum gegen oben weggefördert. Dabei hat das Förderband 11 beispielsweise dieselbe Geschwindigkeit v wie das Transportmittel der Haltemittel 5. Damit nun die Haltemittel wiederum auf einer gekrümmten Bahn gegen oben weggefördert werden können, werden sie am Eingang zum Übergabebereich U.2 oder irgendwo zwischen Übernahmebereich U.1 und Übergabebereich U.2 gedreht (beispielsweise um die Achse des gehaltenen Behälters) derart, dass sie nach der Drehung den Behälter von vorne umfassen. Das Haltemittel 5 wird dann in analoger Weise zum Übernahmebereich beschleunigt und so vom Behälter 1 getrennt und gegen oben weggefahren.

Wenn das Wegfördermittel 11 eine grössere Geschwindigkeit aufweist als das Transportmittel der Haltemittel 5, ist eine Drehung der Haltemittel nicht notwendig. Die Behälter werden dann aus der Umfassung der Haltemittel gefahren, bevor diese nach oben weggefördert werden.

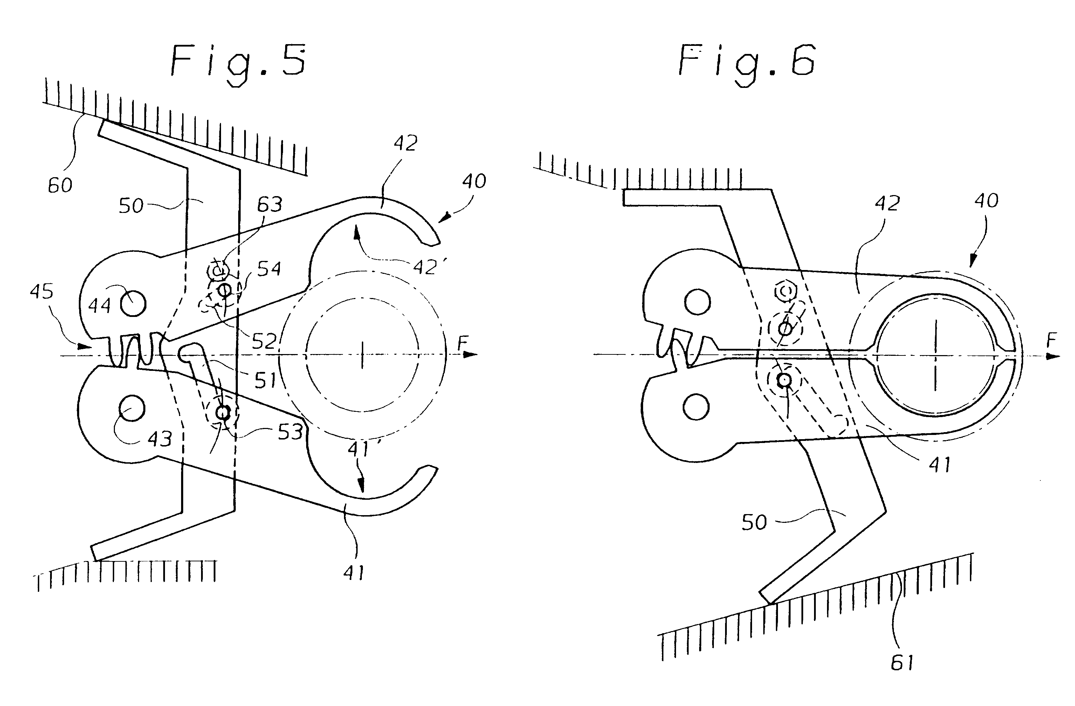

Ein Haltemittel, das ohne vorgängige Drehung, wie sie in der Figur 1 dargestellt ist, und bei gleichen Geschwindigkeiten von Behälter-Wegfördermittel und Haltemittel-Transportmittel auf einer gekrümmten Bahn gegen oben aus dem Übergabebereich weggefördert werden soll, muss vor dem Wegfördern in eine Stellung (Freigabestellung) gebracht werden, in der es mit einer leicht erhöhten Geschwindigkeit über den Kopfbereich des Behälters, also über den Kragen 2 gegen oben wegfahrbar ist. Eine derartige Freigabestellung kann durch ein relative Bewegung von Haltemittelteilen gegeneinander erstellt werden (siehe Figuren 5 und 6).

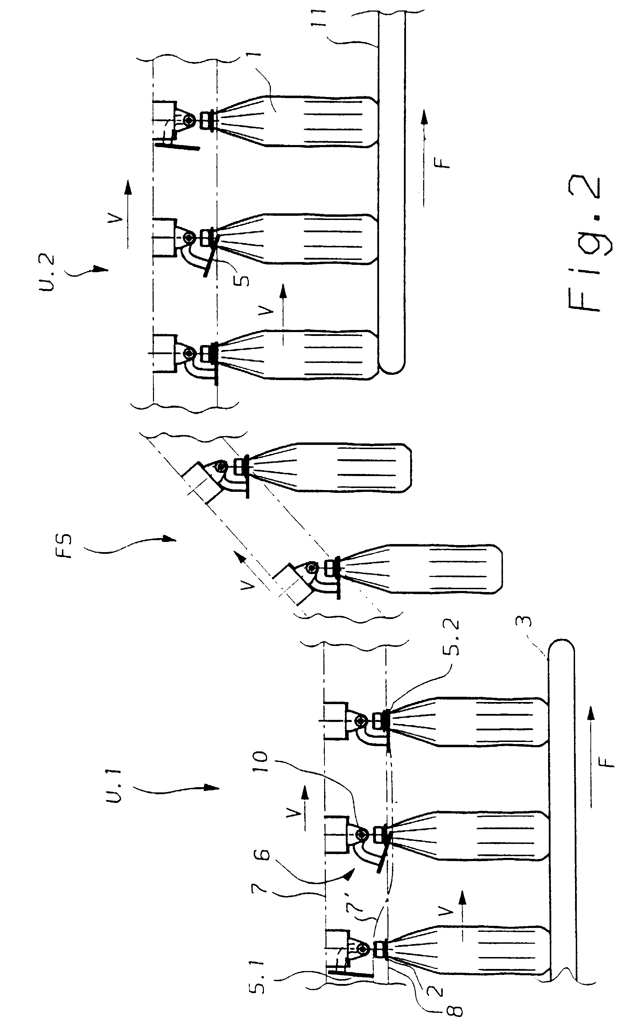

**Figur 2** zeigt in derselben Darstellungsart wie Figur 1 eine weitere Variante des erfindungsgemässen Verfahrens. In den beiden Figuren sind für gleiche Gegenstände dieselben Bezugsziffern eingesetzt.

Auch hier werden die Haltemittel 5 auf einer gekrümmten Bahn 7' in den Übernahmebereich U.1 gefördert. Diese gekrümmte Bahn 7' entsteht durch die Überlagerung einer Transportmittelbahn 7, die beispielsweise im wesentlichen parallel zur Behälter-Zuförderstrecke 8 verläuft, mit einer Schwenkbewegung des Haltemittels 5 um eine Schwenkachse, die quer zur Förderrichtung gerichtet ist, in der Figur um die Schwenkachse des Gelenkes 10 in der Verbindung 6 zwischen Haltemittel 5 und Transportmittel.

Das Haltemittel wird durch eine Schwenkbewegung in Förderrichtung F von einer aufgeschwenkten Position 5.1 in eine abgeschwenkte Halteposition 5.2 gebracht, während welcher Schwenkung es eine gegenüber der Behältergeschwindigkeit v erhöhte Geschwindigkeit hat und den zu fördernden Behälter von hinten aufholt. Selbstverständlich ist das Haltemittel 5 in seiner Form und gegebenenfalls auch die Bahn 7 des Transportmittels derart auf die Form des Behälters 1 abzustimmen, dass dieser durch die Schwenkbewegung des Haltemittels 5 nicht gestört wird.

Die in der Figur 2 dargestellte Übernahme zeigt eine Schwenkbewegung der Haltemittel in Förderrichtung, durch die sie gegenüber der Behälterzuförderung und dem Transportmittel beschleunigt und wieder verzögert werden. In analoger Weise ist es vorstellbar, die Schwenkbewegung gegen die Förderrichtung durchzuführen, wodurch die Haltemittel zuerst verzögert und dann wieder beschleunigt werden, sodass jeder Behälter von vorne von dem vorlaufenden Haltemittel umfahren wird.

Im Übergabebereich U.2 kann das Haltemittel 5 in zur Übernahme analoger Weise wieder zurückgeschwenkt werden, während der Behälter 1 mit gleichbleibender Geschwindigkeit v von einem Wegfördermittel, beispielsweise einem Förderband 11 weggefördert wird.

Wie bereits weiter oben erwähnt, können die in den Figuren 1 und 2 dargestellten Übernahmevarianten auch beliebig kombiniert werden, dadurch, dass die Schwenkbewegung der Haltemittel einer Zuförderung auf einer gekrümmten Zuförderbahn für die Haltemittel überlagert wird.

Ein Vergleich der beiden Figuren 1 und 2 zeigt, dass bei entsprechender Ausgestaltung der Haltemittel 5 Übernahmebereiche und Übergabebereiche auch anders kombinierbar sind und dass für die Variante gemäss Figur 2 die im Zusammenhang mit der Figur 1 genannten Varianten für den Übergabebereich ebenfalls anwendbar sind. Eine zu realisierende Variante richtet sich vor allem nach der Form der zu fördernden Behälter, nach der Art der Förderstrecke über die die Behälter zu fördern sind und nach den Anforderungen, die von anderer Seite an das Behälter-Zufördermittel und an das Behälter-Wegfördermittel gestellt werden.

Anstelle einer Transportkette, an der die Haltemittel äquidistant und gelenkig befestigt sind, können auch Haltemittel zur Anwendung kommen, die an individuell in Führungen laufenden Transportelementen angeordnet und mittels flexibler Verbindungen miteinander zu einer "Kette" derart verbunden sind, dass ihre Abstände variabel sind. Bei Anwendung einer derartigen Haltemittel-Kette mit flexiblen Verbindungen zwischen ihren Gliedern und dadurch variablen Abständen zwischen den Haltemitteln können die geförderten Behälter auf der Förderstrecke beispielsweise gepuffert werden.

Vor dem Übernahmebereich sind für eine derartige Ausführungsform des Haltemittel-Transportmittels auch für die Haltemittel Eintaktmittel vorzusehen, die die Haltemittel auf den vorgegebenen Abstand d und die vorgegebene Zufördergeschwindigkeit v eintakten. Eine Vorrichtung zur Eintaktung von flexibel miteinander verbundenen Kettengliedern ist beispielsweise beschrieben in der Publikation EP-309702 (oder US-4887809, F245) und braucht aus diesem Grunde an dieser Stelle nicht im Detail behandelt zu werden.

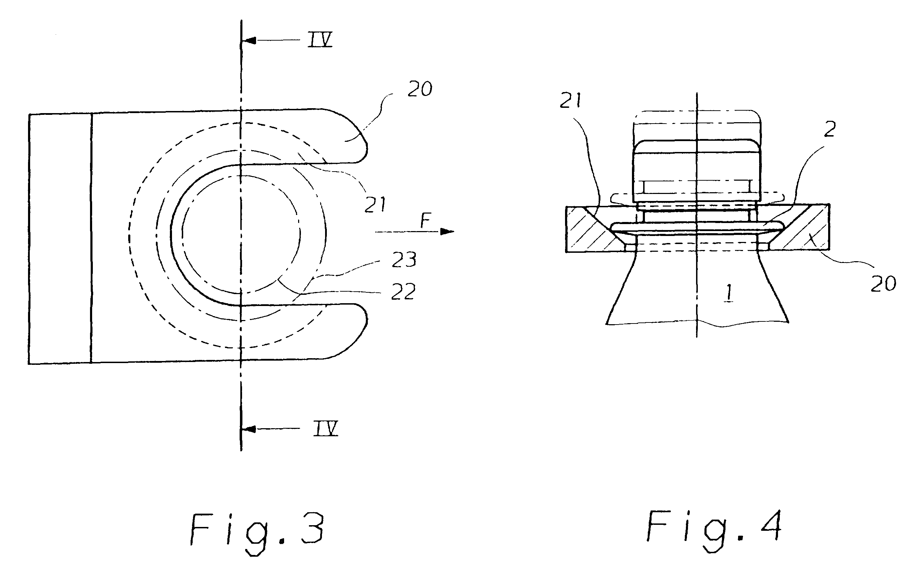

**Figuren 3 bis 6** zeigen zwei beispielhafte Ausführungsformen von Haltemitteln, die sich zur Anwendung in den Verfahrensvarianten gemäss Figuren 1 und 2 eignen.

**Figuren 3 und 4** zeigen eine sehr einfache Variante eines Haltemittels als Draufsicht von unten (Figur 3) und im Schnitt (Figur 4, gemäss Schnittlinie IV-IV in Figur 3). Das Haltemittel ist eine einfache Haltegabel 20, die mit ihren Armen parallel zur Förderrichtung (Pfeil F oder um 180° gedreht) gefördert wird. Die beiden Gabelarme haben einen Abstand voneinander, der grösser ist als der Durchmesser des Halsbereiches, in dem ein zu fördernder Behälter gehalten werden soll, aber kleiner als der Durchmesser des Behälters über dem Halsbereich (z.B. Kragendurchmesser). Mit strichpunktierten Kreisen 22 und 23 sind in der Figur 3 Hals und Kragen des Behälters angedeutet.

Auf der oberen Seite der Haltegabel 20 sind die Innenkanten der Gabelarme als Teilkreis-förmiger Konus 21 ausgestaltet, dessen oberer und grösserer Durchmesser grösser ist als der Kragendurchmesser (Kreis 23) des zu fördernden Behälters. Wie aus der Figur 4 hervorgeht, dient dieser Konus als Sicherung und Zentrierung. Der Behälter 1 wird bei der Übernahme durch die Haltegabel 20 mit seinem Kragen 2 über der Haltegabel 20 (strichpunktierte Position des Behälters 1 in der Figur 4), von dieser unterfahren und wird durch entsprechende Führung des Haltemittels und/oder des Behälter-Zufördermittels am Ende des Übernahmebereichs in den Sicherungskonus 21 abgesenkt. Für Behälter, die nicht mit einer höchsten Sorgfalt zu behandeln sind, kann der Behälter auch einfach in den Sicherungskonus fallen, wenn er das Zufördermittel verlässt. Für die Übergabe wird der Behälter beispielsweise durch das Wegfördermittel wieder in die obere (strichpunktiert dargestellte) Position gehoben, bevor er vom Haltemittel getrennt wird.

Der unterste Bereich des Sicherungskonus 21 kann auch als elastische Lippe ausgestaltet sein.

**Figuren 5 und 6** stellen wiederum als Draufsicht von unten eine weitere, beispielhafte Ausführungsform eines Haltemittels dar. Es handelt sich um einen Haltegreifer 40, dessen zwei Greiferbacken 41 und 42 durch eine Relativbewegung in eine offene Stellung (Figur 5: Übernahme- bzw. Übergabestellung) und in eine geschlossene Stellung (Figur 6: Sicherungs- oder Förderstellung) bringbar sind. Der Haltegreifer 40 weist zusätzlich zu den beiden Greiferbacken 41 und 42 einen Steuerhebel 50 auf.

Die Greiferbacken sind um je eine Drehachse 43 und 44 drehbar an der nicht dargestellten Verbindung des Greifers zu einem Transportmittel befestigt und weisen je eine in ihrer Grösse an den zu greifenden Flaschenhals, bzw. den Kragen angepasste Einformung 41' und 42' auf. Ferner weisen die Greiferbacken 41 und 42 je eine Verzahnung 45 auf, die derart ineinandergreifend angeordnet ist, dass die Greiferbacken 41 und 42 für mindestens einen Teil ihrer Drehung um die Drehachsen 43 und 44 miteinander wirkverbunden sind.

Der Steuerhebel 50 weist zwei Schlitze 51 und 52 auf, in denen je ein eine Greiferbacke 41 bzw. 42 mit dem Steuerhebel 50 verbindender Bolzen 53 bzw. 54 bewegbar ist. Durch die Schlitze 51 und 52 sind zwei extreme Stellungen des Steuerhebels 50 und zwei entsprechende extreme Stellungen der Greiferbacken 41 und 42 definiert: eine offene Stellung (Figur 5), in der der Steuerhebel 50 im wesentlichen quer zur Förderrichtung F ausgerichtet ist, und eine geschlossene Stellung (Figur 6), in der der Steuerhebel 50 auf der Seite der Greiferbacke 41 in Förderrichtung F vorläuft.

Um den Greifer von seiner offenen Stellung (Figur 5) in seine geschlossene Stellung (Figur 6) zu bringen, ist er auf der Seite der Greiferbacke 42 an einer Kulisse (Kulissenfläche 60 in Figur 5) vorbeizuführen, die den Steuerhebel 50 auf dieser Greiferseite verzögert. Dadurch wird der Steuerhebel 50 relativ zu den Greiferbacken 41 und 42 verdreht und werden die Bolzen 53 bzw. 54 in den Schlitzen 51 bzw. 52 bewegt, woraus eine durch die Verzahnung 45 synchronisierte Drehbewegung der Greiferbacken um die Drehachsen 43 bzw. 44 resultiert. Ist der Greifer von seiner geschlossenen in seine offene Stellung zu bringen, ist er an einer Kulisse (Kulissenfläche 61, Figur 6) vorbeizuführen, die den Steuerhebel 50 auf der Seite der Greiferbacke 41 verzögert.

Um den Greifer in seiner offenen bzw. geschlossenen Stellung zu fixieren, ist ein Verriegelungsmittel vorgesehen. Dies ist beispielsweise eine Kugel 63, die auf der den Greiferbacken zugewandten Seite des Steuerhebels 50 gefedert eingelassen ist, und für die in einem der Greiferbacken 42 zwei entsprechend positionierte Vertiefungen (nicht dargestellt) vorgesehen sind.

Die in den Figuren 3 bis 6 dargestellten Haltemittel stellen beispielhafte Ausführungsformen dar, die für das Ergreifen und Fördern bestimmter Behälter ausgestaltet sind. Für Anwendungen mit anderen Behältern, insbesondere auch für halslose Behälter sind die Haltemittel in entsprechender Weise anzupassen. In jedem Falle sind die Behälter in ihrem Öffnungsbereich zu halten und sind die Behälter bei der Übernahme von hinten oder von vorne (nicht seitliche) zu umgreifen.

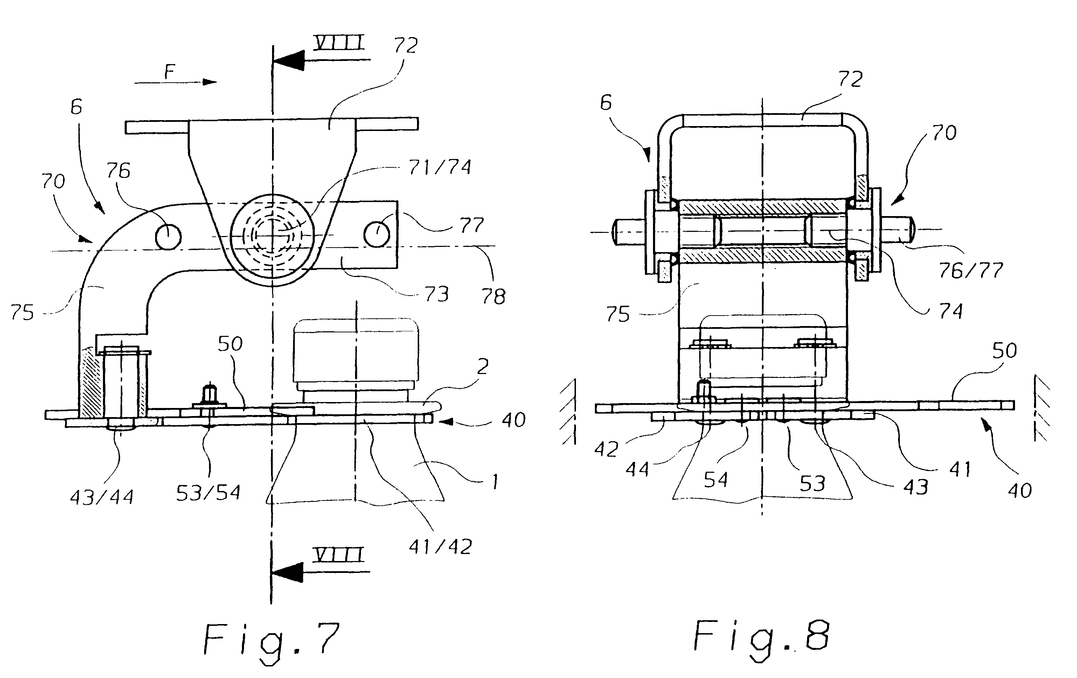

**Figuren 7 und 8** zeigen eine beispielhafte gelenkige Verbindung 6 zwischen Haltegreifer 40 und einem Transportmittel als Seitenansicht quer zur Förderrichtung F (Figur 7) und quer zur Förderrichtung F geschnitten (Figur 8, Schnittlinie VlII-VIII in Figur 8). Der Greifer 40 ist als Beispiel eines Halte' mittels mit der Verbindung 6 dargestellt. In derselben Weise könnte die Haltegabel 20 gemäss Figuren 3 und 4 oder ein anderes geeignetes Haltemittel an der Verbindung 6 befestigt sein. Der Haltegreifer 40 ist in seiner geschlossenen Stellung den Halsbereich eines zu fördernden Behälters 1 mit Kragen 2 umgreifend dargestellt. Die bereits im Zusammenhang mit den Figuren 5 und 6 beschriebenen Greiferteile sind mit denselben Bezugsnummern bezeichnet.

Die Verbindung 6 weist einen Schwenkteil 70 und einen Befestigungsteil 72 auf, die durch eine gelenkige Verbindung 71 miteinander verbunden sind.

Der Schwenkteil 70 ist zweiarmig. Ein Arm 73 ist im wesentlichen parallel zu den Greiferbacken 41 und 42 ausgerichtet und ist über Zapfen 74 gelenkig mit dem Befestigungsteil 72 verbunden. Der andere Arm 75 ist im wesentlichen senkrecht zu den Greiferbacken 41 und 42 ausgerichtet und trägt um Drehachsen 43 und 44 drehbar die Greiferbacken, derart, dass sie im wesentlichen in einer zum Arm 73 parallelen Ebene drehbar sind.

Der zu den Greiferbacken 41 und 42 parallele Arm 73 des Schwenkteils weist auch beispielsweise vier Steuerbolzen (76, 77) auf, die zur Steuerung der Schwenkbewegung des Schwenkteils 70 relativ zum Verbindungsstück 72 herangezogen werden können. Werden diese Bolzen von einer entsprechenden Kulisse (beispielsweise mit einer Steuerfläche gemäss der strichpunktierten Linie 78) geführt, ist der Schwenkteil 70 in der dargestellten Schwenkposition gehalten, das heisst eine freie Schwenkbewegug ist verhindert. Fehlt eine derartige oder entsprechende Kulisse, ist die Schwenkbewegung des Schwenkteils 70 freigegeben und stellt sich eine Schwenkposition ein, die der Schwerkraft, die auf die ergriffene Flasche und auf den Greifer wirkt, entspricht, derart, dass die Flasche 1 unabhängig von der Position des Befestigungsteils 72, der im wesentlichen in Förderrichtung ausgerichtet ist, immer senkrecht hängt.

Entsprechede Kulissen werden auch zur Steuerung der Schwenkposition des Haltemittels für eine Übernahme bzw. Übergabe, wie sie in der Figur 2 dargestellt sind, eingesetzt.

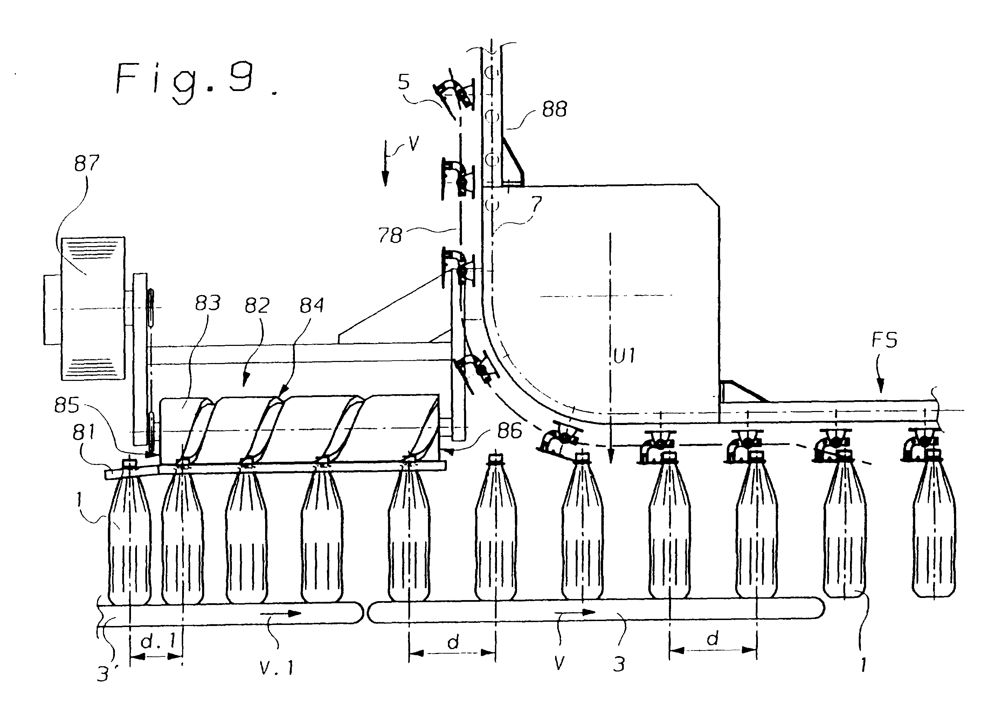

**Figur 9** zeigt eine beispielhafte Ausführungsform einer Vorrichtung zur Durchführung des erfindungsgemässen Verfahrens, insbesondere den Zuförderbereich der Vorrichtung mit einem Zubringer (3'), einem Eintaktmittel (81/82), einem Behälter-Zufördermittel (3) und einer Haltemittel-Zuförderung (5/7/88), den Übernahmebereich (U.1) der Vorrichtung und den Anfang der Förderstrecke (FS) der Vorrichtung, wobei die letztgenannten der Verfahrensvariante gemäss Figur 1 entsprechen.

Die Behälter 1 - es handelt sich um gefüllte und verschlossene Flaschen - werden auf einer ersten Förderbahn 3' (Zubringer) mit einer vorgegebenen Förderleistung (Zubringer-Geschwindigkeit v.1 und Flaschenabstand d.1) zugeliefert. Die Flaschen werden durch Führungen 81, die im Halsbereich der zuzufördernden Flaschen angeordnet sind, leicht von der Förderbahn 3' abgehoben, derart, dass mindestens ein Teil ihres Gewichtes von den Führungen 81 getragen wird.

Die geführten und leicht von der ersten Förderbahn 3' abgehobenen Flaschen werden dann durch eine Eintaktschraube 82, die eine spiralig um einen zylindrischen Schraubenkörper 83 verlaufende Nut 84 aufweist, eingetaktet und beschleunigt, während sie weiter durch die Führungen 81 seitlich und in der Höhe geführt sind. Dazu nimmt die Steigung der Nut 84 von der Eingangsseite 85 zur Ausgangsseite 86 der Eintaktschraube 82 zu, derart, dass sie auf der Eingangsseite 85 dem Abstand d.1 der zugebrachten Flaschen, auf der Ausgangsseite 86 dem Zuförder-Abstand d von Flaschen 1 und Transportmittel entspricht. Die Eintaktschraube 82 wird von einem Antrieb 87 mit einer Umdrehungszahl angetrieben, die dem Takt der Zubringung der Flaschen und dem Transporttakt entspricht.

Die Öffnungsbereiche der zuzufördernden Flaschen 1 werden durch die Führungen 81 geführt in den Bereich der Eintaktschraube 82 gefördert, in der Nut 84 positioniert und durch diese eingetaktet und beschleunigt. Da die Flaschen dabei leicht von der Förderbahn 3' abgehoben sind, werden sie von dieser zwar noch in einer stehenden Position stabilisiert, können aber durch die Eintaktschraube 82 relativ zu dieser Förderbahn 3' beschleunigt werden. Bevor die Flaschen 1 den Ausgangsbereich 86 der Eintaktschraube 82 erreichen, werden sie auf eine zweite Förderbahn 3 (Zufördermittel) übergeben. Die Geschwindigkeit dieser zweiten Förderbahn 3 ist die vorgegebene Zufördergeschwindigkeit v, die auch der Geschwindigkeit der aus der Nut 84 der Eintaktschraube 82 austretenden Flaschen entspricht.

Auf dieser weiteren Förderbahn 3 gefördert verlassen die Flaschen die Führung 81 und die Nut 84 der Eintaktschraube 82 und treten in den Übernahmebereich U.1 ein. Auch die Haltemittel 5 werden in den Übernahmebereich U.1 gefördert in der Art, wie es im Zusammenhang mit der Figur 1 bereits beschrieben wurde. Das Transportmittel für die Haltemittel ist eine Transportkette (schematisch dargestellt durch die strichpunktierte Linie 7), die in einer Führung 88 auf einer um ca. 90° gekrümmten Bahn von oben in den Übernahme bereich U.1 geführt wird.

Die zweite Förderbahn 3 (Zufördermittel) endet nach dem effektiven Übernahmebereich U.1, sodass sie bei der Zusammenführung von Haltemittel und Flasche und beim Übernahmevorgang als Stabilisierungsmittel dienen kann.

Aus der Figur 9 ist auch ersichtlich, dass die Haltemittel 5 relativ zur Transportkette schwenkbar sind (oberstes Haltemittel in anderer Schwenkposition als die anderen), dass aber insbesondere für die Übernahme der Flaschen die Haltemittel derart geführt sind (Kulisse 78, dass sie nicht frei verschwenkbar sind.

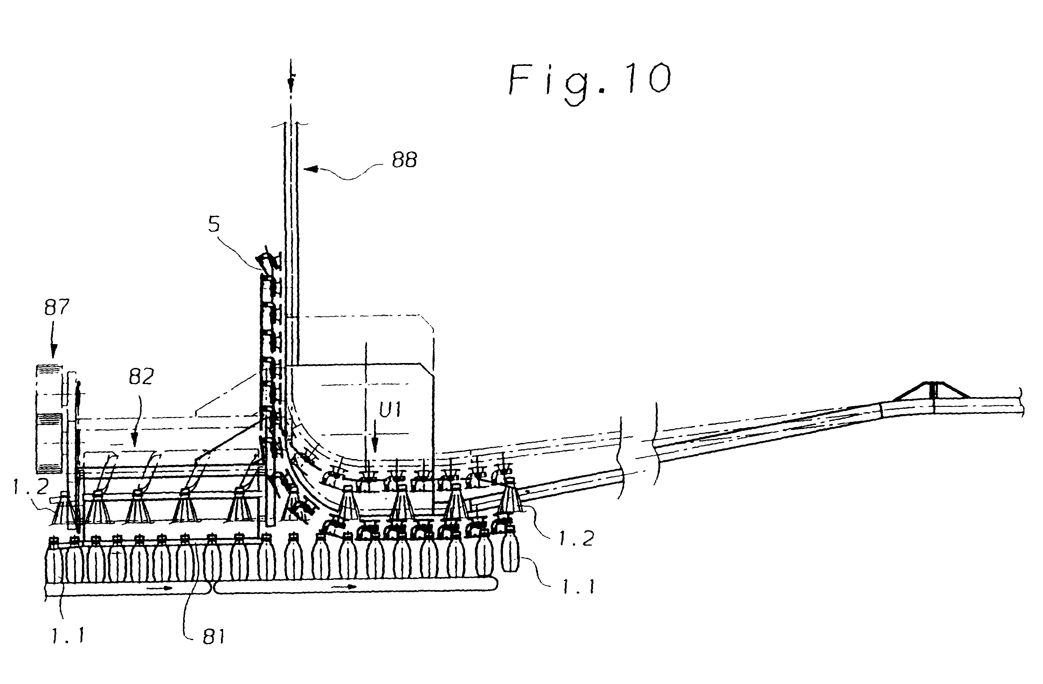

**Figur 10** zeigt die Verstellbarkeit der Vorrichtung gemäss Figur 9 für die Förderung verschieden hoher Flaschen 1.1 und 1.2. Die Vorrichtung ist in der Einstellung für die kleineren Flaschen 1.1 ausgezogen dargestellt, in der Einstellung für die grösseren Flaschen 1.2 strichpunktiert. Für eine einfache Verstellung sind die Eintaktmittel 81/82/87 und die Führung 88 der Transportkette starr miteinander verbunden und in der Höhe verstellbar.

Die kleinen Flaschen 1.1 werden mit einem gleichen Abstand in den Übernahmebereich U.1 zugefördert wie die Haltemittel 5, sodass jedes Haltemittel eine Flasche übernimmt. Die grösseren Flaschen 1.2 werden mit einem Abstand zugefördert, der doppelt so gross ist wie der Abstand der Haltemittel, derart, dass nur jedes zweite Haltemittel eine Flasche ergreift. Auf diese Weise kann die Belastung der Fördervorrichtung bei der Förderung verschieden grosser Behälter einigermassen ausgeglichen werden und kann eine Berührung der grösseren Behälter in steileren Förderstreckenbereichen verhindert werden.

Damit die beiden in der Figur 10 dargestellten Zuförderarten möglich sind, ist es notwendig, dass die Eintaktschraube zwei parallel verlaufende Nuten aufweist (zweigängige Schraube), oder dass die Eintaktschraube beim Wechseln des Übernahmemodus ebenfalls ausgewechselt wird. In der Figur 10 ist für eine bessere Übersichtlichkeit nur die für die Zuförderung der grösseren Flaschen notwendige Eintaktschraube bzw. Nut dargestellt.

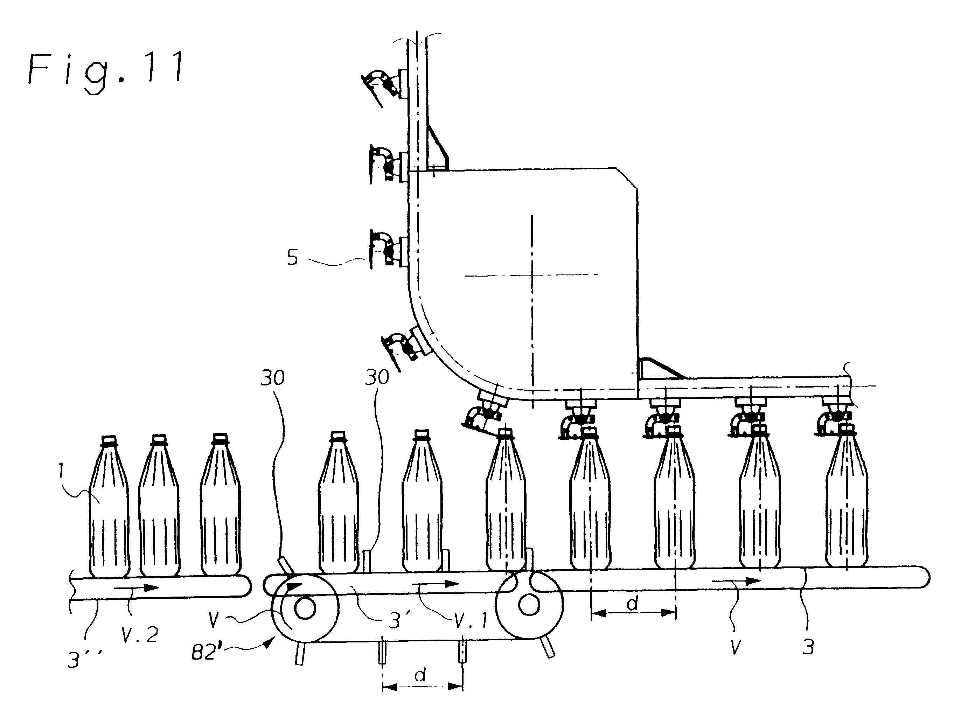

**Figur 11** zeigt eine weitere Ausführungsform der edindungsgemässen Vorrichtung im Bereiche der Zuförderung und der Übernahme der zu fördernden Behälter 1 durch Haltemittel 5. Die Ausführungsform entspricht in den wesentlichen Zügen derjenigen der Vorrichtung gemäss Figur 9. Der Unterschied der beiden Ausführungsformen besteht in der Ausgestaltung des Eintaktmittels 82'. Während das Eintaktmittel gemäss Figur 9 im wesentlichen aus einer Eintaktschraube besteht und auf den Öffnungsbereich der Flaschen 1 wirkt, besteht das Eintaktmittel 82' gemäss Figur 11 aus einer Mehrzahl von äquidistanten Fördernocken 30, die beispielsweise durch eine Lücke in der ersten und der zweiten Förderbahn 3' und 3 über die Förderfläche, auf der die Flaschen stehen, reichen und die auf den Bodenbereich dieser Flaschen wirken. Die Eintaktnocken 30 sind mit einem Abstand d, der dem vorgegebenen Zuförderabstand für die Flaschen entspricht, beispielsweise an einer endlosen Transportkette montiert, wobei die Kette mit einer Geschwindigkeit angetrieben ist, die der vorgegebenen Zufördergeschwindigkeit v entspricht. Für diese Ausführungsform hat der Zubringer 3' eine Geschwindigkeit v.1, die grösser ist als die Zufördergeschwindigkeit, sodass die Eintaktnocken 30 vor den Flaschen laufen und auf diese bremsend wirken.

Gegebenenfalls kann vor dem Zubringer 3' eine weitere Förderbahn 3" angeordnet sein, die mit einer kleineren Geschwindigkeit angetrieben ist als der Zubringer 3'.

## Patentansprüche

1. Verfahren zur hängenden Förderung von Behältern (1), die einen Boden und einen dem Boden im wesentlichen gegenüberliegenden offenen oder geschlossenen Öffnungsbereich haben, wobei die Behälter (1) in einem Übernahmebereich (U.1), dem sie durch eine am Bodenbereich angreifende Förderkraft als Behälterstrom mit einer vorgegebenen Zufördergeschwindigkeit (v) und mit einem vorgegebenen Abstand (d) voneinander zugefördert werden, von Haltemitteln (5) übernommen werden, wobei die die Behälter (1) im Öffnungsbereich haltenden Haltemittel (5) über eine Förderstrecke (FS) gefördert werden und wobei die Behälter (1) in einem Übergabebereich (U.2) von den Haltemitteln (5) getrennt werden, **dadurch gekennzeichnet,** dass die Haltemittel (5) im Übemahmebereich (U.1) von oben auf einer gekrümmten Bahn (7') zwischen den Behältern (1) in den Behälterstrom geführt werden, wobei die gekrümmte Bahn (7') am Ende des Übernahmebereichs (U.1) tangential in die Förderbahn (8) der Behälter (1) mündet, wobei die Haltemittel (5) beim Einführen in den Behälterstrom anfänglich eine Geschwindigkeit (v') haben, die von der Zufördergeschwindigkeit (v) verschieden ist, und dann auf die Zufördergeschwindigkeit (v) verzögert oder beschleunigt werden und wobei die Zuförderung der Behälter (1) und der Haltemittel (5) derart aufeinander abgestimmt ist, dass je ein Haltemittel (5) einen Behälter (1) von hinten oder von vorne im Öffnungsbereich umfasst, wenn das Haltemittel (5) die Zufördergeschwindigkeit (v) erreicht hat.

2. Verfahren nach Anspruch 1, **dadurch gekennzeichnet,** dass die Haltemittel (5) auf einer von oben gegen den Behälterstrom gekrümmten Bahn (7') in den Übernahme bereich (U.1) geführt werden, wobei die Position der Haltemittel (5) relativ zur gekrümmten Bahn (7') im wesentlichen unverändert bleibt.

3. Verfahren nach Anspruch 1, **dadurch gekennzeichnet,** dass die Haltemittel (5) auf einer von oben gegen den Behälterstrom gekrümmten oder auf einer im wesentlichen parallel zum Behälterstrom verlaufenden Bahn (7') in den Übernahmebereich (U.1) geführt werden, wobei der Bewegung der Haltemittel (5) auf dieser Bahn im Übernahmebereich (U.1) eine individuelle Verschwenkung jedes Haltemittels (5) überlagert wird.

4. Verfahren nach einem der Ansprüche 1 bis 3, **dadurch gekennzeichnet,** dass die Haltemittel (5) mindestens während ihrer Förderung über die Förderstrecke (FS) in Förderrichtung (F) gegenüber der Förderstrecke frei verschwenkbar sind.

5. Verfahren nach einem der Ansprüche 1 bis 4, **dadurch gekennzeichnet,** dass die Haltemittel (5) nach oder bei der Übernahme der Behälter (1) in eine Sicherungsstellung gebracht werden.

6. Verfahren nach einem der Ansprüche 1 bis 4, **dadurch gekennzeichnet,** dass die Behälter (1) nach oder bei der Übernahme durch die Haltemittel (5) durch eine Relativbewegung zwischen Behälter (1) und Haltemittel (5) in eine gesicherte Position gebracht werden.

7. Verfahren nach einem der Ansprüche 1 bis 6, **dadurch gekennzeichnet,** dass die Behälter (1) im Übergabebereich (U.2) einem am Bodenbereich der Behälter angreifenden Wegfördermittel (11) zugeführt werden und dass die Haltemittel (5) auf einer nach oben gekrümmten Bahn von den Behältern (1) weggefördert werden.

8. Verfahren nach Anspruch 7, **dadurch gekennzeichnet,** dass das Wegfördermittel (11) dieselbe Geschwindigkeit hat wie die in den Übergabebereich (U.2) geförderten Behälter (1) und dass die Haltemittel (5) vor der Übergabe um eine senkrechte Achse gedreht werden.

9. Verfahren nach Anspruch 7, **dadurch gekennzeichnet,** dass das Wegfördermittel (11) eine grössere Geschwindigkeit hat als die in den Übergabebereich (U.2) geförderten Behälter (1) und dass die Haltemittel (5) erst nach oben weggefördert werden, wenn die Behälter (1) sich aus der Umfassung der Haltemittel (5) entfernt haben.

10. Verfahren nach Anspruch 7, **dadurch gekennzeichnet,** dass das Wegfördermittel (11) dieselbe Geschwindigkeit hat wie die in den Übergabebereich (U.2) geförderten Behälter (1) und dass die Haltemittel (5) für die Übergabe in eine Freigabestellung gebracht werden.

11. Verfahren nach einem der Ansprüche 1 bis 10, **dadurch gekennzeichnet,** dass die Behälter (1) vor der Zuförderung in den Übemahmebereich (U.1) eingetaktet werden, wobei sie von einer Zubringergeschwindigkeit (v.1) auf die Zufördergeschwindigkeit (v) gebracht werden und gleichzeitig ihre Abstände vergleichmässigt werden.

12. Verfahren nach Anspruch 11, **dadurch gekennzeichnet,** dass die Behälter (1) bei der Eintaktung durch eine an ihrem Öffnungsbereich angreifende Kraft beschleunigt oder durch eine an ihrem Bodenbereich angreifende Kraft gebremst werden.

13. Vorrichtung zur hangenden Forderung von Behaltern (1) welche Vorrichtung eine Mehrzahl von Haltemitteln (5) aufweist und ein Transportmittel, mit dem die Haltemittel (5) äquidistant auf einer vorgegebenen Bahn (7') durch einen Übernahmebereich (U.1) förderbar sind und dann über eine Förderstrecke (FS) zu einem Übergabebereich (U.2) und vom Übergabebereich (U.2) weg, und welche Vorrichtung zur Zuförderung der Behälter (1) auf einer Behälterbahn (8) durch den Übernahmebereich (U.1) ein auf den Bodenbereich der zu fördernden Behälter (1) wirkendes Behälter-Zufördermittel (3) aufweist, dadurch gekennzeichnet, dass die vorgegebene Bahn (7') auf der die Haltemittel (5) durch den Übernahmebereich (U.1) förderbar sind, von oben gekrümmt gegen die Behälterbahn (8) verläuft und am Ende des Übernahmebereiches (U.1) tangential in die Behälterbahn (8) mündet, dass die Haltemittel (5) auf der gekrümmten Bahn radial vom Transportmittel beabstandet und/oder gegenüber dem Transportmittel in Förderrichtung (F) oder gegen die Förderrichtung gesteuert verschwenkbar sind und dass das Transportmittel und das Behälter-Zufördermittel (3) mit derselben Geschwindigkeit antreibbar sind

14. Vorrichtung nach Anspruch 13, **dadurch gekennzeichnet,** dass das Transportmittel eine Transportkette ist.

15. Vorrichtung nach Anspruch 13, **dadurch gekennzeichnet,** dass das Transportmittel aus einer Mehrzahl von individuell förderbaren Transportelementen besteht

16. Vorrichtung nach einem der Ansprüche 13 bis 15, **dadurch gekennzeichnet,** dass die Haltemittel (5) zweiarmige Gabeln (20) sind, die mittels einer gelenkigen Verbindung (6) am Transportmittel angeordnet sind.

17. Vorrichtung nach einem der Ansprüche 13 bis 15, **dadurch gekennzeichnet,** dass die Haltemittel (5) Haltegreifer (40) mit gegeneinander beweglichen Greiferbacken (41/42) sind und dass zur Veränderung der relativen Stellung der Greiferbacken mindestens im Übernahme- und im Übergabebereich Steuermittel vorgesehen sind.

18. Vorrichtung nach einem der Ansprüche 13 bis 17, **dadurch gekennzeichnet,** dass zur Wegförderung der Behälter (1) aus dem Übergabebereich (U.2) ein Behälter-Wegfördermittel (11) vorgesehen ist.

19. Vorrichtung nach einem der Ansprüche 13 bis 18, **dadurch gekennzeichnet,** dass sie zusätzlich vor dem Übernahmebereich (U.1) angeordnete Eintaktmittel (81/82, 82') zur Einstellung der vorgegebenen Behälterabstände (d) und der vorgegebenen Fördergeschwindigkeit (v) für die Zuförderung der Behälter (1) zum Übernahmebereich (U.1) aufweist.

20. Vorrichtung nach Anspruch 19, **dadurch gekennzeichnet,** dass das Eintaktmittel eine an den Öffnungsbereichen der zuzufördernden Behälter (1) angreifende Eintaktschraube (82) und Führungen (81) aufweist, wobei die Eintaktschraube eine Nut (84) hat, die eine vom Eingangsbereich (85) der Schraube (82) zu ihrem Ausgangsbereich (86) wachsende Steigung aufweist

21. Vorrichtung nach Anspruch 19, **dadurch gekennzeichnet,** dass das Eintaktmittel (82') eine Mehrzahl von auf die Bodenbereiche der zuzufördernden Behälter (1) wirkende Eintaktnocken (30) aufweist, die an einer endlosen Kette äquidistant angeordnet sind.

22. Vorrichtung nach einem der Ansprüche 13 bis 21, **dadurch gekennzeichnet,** dass die Haltevorrichtung (5) mit einer Verbindung (6) als Teil der Vorrichtung ausgestaltet ist und dass die Verbindung (6) ein Gelenk (71) aufweist, wobei das Haltemittel (5) zur Umfassung eines zu fördernden Behälters zwei Arme aufweist, die im wesentlichen quer zur Verbindung (6) angeordnet sind.

23. Vorrichtung nach Anspruch 22, **dadurch gekennzeichnet,** dass die Innenkanten der Arme als Sicherungskonus (21) ausgebildet sind.

24. Vorrichtung nach Anspruch 22, **dadurch gekennzeichnet,** dass das Haltemittel (5) ein Haltegreifer (40) mit zwei gegeneinander bewegbaren Greiferbacken (41/42) ist, wobei die Greiferbacken drehbar an der Verbindung (6) angeordnet sind und ein Synchronisationsmittel zur Synchronisation ihrer Drehbewegung vorgesehen ist.

25. Vorrichtung Verbindung nach Anspruch 24, **dadurch gekennzeichnet,** dass der Haltegreifer einen Steuerhebel (50) aufweist, der durch in Schlitzen (51 und 52) bewegbare Bolzen (53 und 54) mit den Greiferbacken (41 und 42) verbunden ist und quer zur Förderrichtung (F) über die Greiferbacken vorsteht.

26. Vorrichtung nach Anspruch 24 oder 25, **dadurch gekennzeichnet,** dass als Synchronisationsmittel eine Verzahnung (45) vorgesehen ist

## Claims

1. Method for the suspended conveying of containers (1), which have a base and an open or closed opening region located essentially opposite the base, it being the case that the containers (1) are received by retaining means (5) in a receiving region (U.1) into which said containers are conveyed, by a conveying force acting on the base region, as a container stream at a predetermined feed-in speed (v) and at a predetermined spacing (d) from one another, it being the case that the retaining means (5), which retain the containers (1) in the opening region, are conveyed over a conveying section (FS), and it being the case that the containers (1) are separated from the retaining means (5) in a transfer region (U.2), characterized in that, in the receiving region (U.1), the retaining means (5) are guided into the container stream between the containers (1) from above on a curved path (7'), it being the case that the curved path (7') opens out tangentially into the conveying path (8) for the containers (1) at the end of the receiving region (U.1), it being the case that, upon introduction into the container stream, the retaining means (5) initially have a speed (v') which differs from the feed-in speed (v), and are then decelerated or accelerated to the feed-in speed (v), and it being the case that the feed-in operations of the containers (1) and of the retaining means (5) are coordinated with one another such that in each case one retaining means (5) encloses a container (1) in the opening region from behind or from the front when the retaining means (5) has reached the feed-in speed (v).

2. Method according to Claim 1, characterized in that the retaining means (5) are guided into the receiving region (U.1) on a path (7') which is curved towards the container stream from above, the position of the retaining means (5) relative to the curved path (7') remaining essentially unchanged.

3. Method according to Claim 1, characterized in that the retaining means (5) are guided into the receiving region (U.1) on a path (7') which is curved towards the container stream from above or runs essentially parallel to the container stream, individual pivoting of each retaining means (5) being superimposed with the movement of the retaining means (5) on said path in the receiving region (U.1).

4. Method according to Claims 1 to 3, characterized in that, at least as they are conveyed over the conveying section (FS), the retaining means (5) can be pivoted freely in the conveying direction (F) in relation to the conveying section.

5. Method according to one of Claims 1 to 4, characterized in that the retaining means (5) can be brought into a securing position following or during the operation for receiving the containers (1).

6. Method according to Claims 1 to 4, characterized in that the containers (1) can be brought into a secured position following or during the operation in which they are received by the retaining means (5) by virtue of a relative movement between the container (1) and retaining means (5).

7. Method according to one of Claims 1 to 6, characterized in that, in the transfer region (U.2), the containers (1) are fed to a removal means (11) which act on the base region of the containers, and in that the retaining means (5) are conveyed away from the containers (1) on an upwardly curved path.

8. Method according to Claim 7, characterized in that the removal means (11) has the same speed as the containers (1) conveyed into the transfer region (U.2), and in that the retaining means (5) are rotated about a vertical axis before the transfer.

9. Method according to Claim 7, characterized in that the removal means (11) has a greater speed than the containers (1) conveyed into the transfer region (U.2), and in that the retaining means (5) are only conveyed away upwards when the containers (1) have been removed from the enclosing grasp of the retaining means (5).

10. Method according to Claim 7, characterized in that the removal means (11) has the same speed as the containers (1) conveyed into the transfer region (U.2), and in that the retaining means (5) are brought into a release position for the transfer.

11. Method according to one of Claims 1 to 10, characterized in that, before they are conveyed into the receiving region (U.1), the containers (1) are adjusted, in which case they are brought to a feed-in speed (v) from a supply speed (v.1) and, at the same time, the spacings between them are evened out.

12. Method according to Claim 11, characterized in that, during the adjustment, the containers (1) are accelerated by a force acting on their opening region or are braked by a force acting on their base region.

13. Apparatus for the suspended conveying of containers (1), which apparatus has a plurality of retaining means (5) and a transporting means by way of which the retaining means (5) can be conveyed in an equidistant manner on a predetermined path (7') through a receiving region (U.1) and then over a conveying section (FS) to a transfer region (U.2) and away from the transfer region (U.2), and which device, for the purpose of conveying the containers (1) on a container path (8) through the receiving region (U.1), has a container feed-in means (3) acting on the base region of the containers (1) which are to be conveyed, characterized in that the predetermined path (7') on which the retaining means (5) can be conveyed through the receiving region (U.1) runs in a curved manner from above towards the container path (8) and, at the end of the receiving region (U.1), opens out tangentially into the container path (8), in that, on the curved path, the retaining means (5) are spaced apart radially from the transporting means and/or can be pivoted in a controlled manner with respect to the transporting means in the conveying direction (F), or counter to the conveying direction, and in that the transporting means and the container feed-in means (3) can be driven at the same speed.

14. Apparatus according to Claim 13, characterized in that the transporting means is a transporting chain.

15. Apparatus according to Claim 13, characterized in that the transporting means comprises a plurality of transporting elements which can be conveyed individually.

16. Apparatus according to one of Claims 13 to 15, characterized in that the retaining means (5) are two-armed forks (20) which are arranged on the transporting means by way of an articulated connection (6).

17. Apparatus according to one of Claims 13 to 15, characterized in that the retaining means (5) are retaining grippers (40) with gripper jaws (41/42) which can be moved with respect to one another, and in that control means are provided in order to change the relative position of the gripper jaws at least in the receiving and in the transfer regions.

18. Apparatus according to one of Claims 13 to 17, characterized in that a container removal means (11) is provided in order to convey away the containers (1) out of the transfer region (U.2).

19. Apparatus according to one of Claims 13 to 18, characterized in that it additionally has adjusting means (81/82, 82') which are arranged upstream of the receiving region (U.1) and are intended for adjusting the predetermined container spacings (d) and the predetermined conveying speed (v) for conveying the containers (1) into the receiving region (U.1).

20. Apparatus according to Claim 19, characterized in that the adjusting means has an adjusting screw (82), which acts on the opening regions of the containers (1) which are to be conveyed in, and guides (81), the adjusting screw having a groove (84) which has a pitch which increases from the inlet region (85) of the screw (82) to the outlet region (86) of the same.

21. Apparatus according to Claim 19, characterized in that the adjusting means (82') has a plurality of adjusting protrusions (30) which act on the base regions of the containers (1) which are to be conveyed in and are arranged in an equidistant manner on an endless chain.

22. Retaining apparatus (5) having a connection (6) as part of the apparatus according to one of Claims 13 to 21, characterized in that the retaining apparatus having a connection (6) is configured as part of the apparatus, and in that the connection (6) has an articulation (71), the retaining means (5), for enclosing a container which is to be conveyed, having two arms which are arranged essentially transversely to the connection (6).

23. Retaining apparatus according to Claim 22, characterized in that the inner edges of the arms are designed as a securing cone (21).

24. Retaining apparatus according to Claim 22, characterized in that the retaining means (5) is a retaining gripper (40) with two gripper jaws (41/42) which can be moved with respect to one another, the gripper jaws being arranged rotatably on the connection (6) and a synchronization means being provided for synchronizing the rotary movement thereof.

25. Retaining apparatus according to Claim 24, characterized in that the retaining gripper has a control lever (50) which is connected to the gripper jaws (41 and 42) by bolts (53 and 54), which can be moved in slots (51 and 52), and projects beyond the gripper jaws transversely to the conveying direction (F).

26. Retaining apparatus according to Claim 24 or 25, characterized in that a toothing arrangement (45) is provided as the synchronization means.

## Revendications

1. Procédé de transport suspendu de récipients (1), qui sont munis d'un fond et d'une zone avec un orifice ouvert ou fermé sensiblement opposée au fond, les récipients (1) étant prélevés par des moyens de retenue (5) dans une zone de réception (U.1) vers laquelle ils sont acheminés en forme de file de récipients par une force de transport appliquée sur la zone du fond avec une vitesse de transport (v) prédéterminée et à une distance (d) prédéterminée l'un de l'autre, les moyens de retenue (5), qui maintiennent les récipients (1) dans la zone de l'orifice, étant acheminés sur une ligne de transport (FS) et les récipients (1) étant séparés des moyens de retenue (5) dans une zone de transfert (U.2), caractérisé en ce que les moyens de retenue (5) dans la zone de réception (U.1) sont guidés à partir du haut sur une voie courbe (7') pour parvenir entre les récipients (1) dans la file de récipients, la voie courbe (7') débouchant à l'extrémité de la zone de réception (U.1) tangentiellement vers la voie de transport (8) des récipients (1), les moyens de retenue (5), au moment de l'introduction dans la file de récipients, étant acheminés au début avec une vitesse (v') qui est différente de la vitesse de transport (v) et sont ensuite ralentis ou accélérés pour atteindre la vitesse de transport (v), et l'acheminement des récipients (1) et l'acheminement des moyens de retenue (5) étant ajustés l'un à l'autre de telle sorte que chaque moyen de retenue (5) entoure par l'arrière ou par l'avant un récipient (1) dans la zone de l'orifice, lorsque le moyen de retenue (5) a atteint la vitesse de transport (v).

2. Procédé selon la revendication 1, caractérisé en ce que les moyens de retenue (5) sont guidés vers la zone de réception (U.1) sur une voie (7') courbée à partir du haut en direction de la file de récipients, la position des moyens de retenue (5) par rapport à la voie courbe (7') restant sensiblement inchangée.

3. Procédé selon la revendication 1, caractérisé en ce que les moyens de retenue (5) sont guidés vers la zone de réception (U.1) sur une voie (7'), courbée à partir du haut en direction de la file de récipients ou sensiblement parallèle à la file de récipients, un pivotement individuel de chaque moyen de retenue (5) étant superposé au mouvement des moyens de retenue (5) sur cette voie dans la zone de réception (U.1).

4. Procédé selon l'une quelconque des revendications 1 à 3, caractérisé en ce que les moyens de retenue (5), au moins pendant leur transport sur la ligne de transport (FS) dans le sens de transport (F), peuvent pivoter librement par rapport à la ligne de transport.

5. Procédé selon l'une quelconque des revendications 1 à 4, caractérisé en ce que les moyens de retenue (5) sont amenés dans une position de blocage après ou au moment de la réception des récipients (1).

6. Procédé selon l'une quelconque des revendications 1 à 4, caractérisé en ce que les récipients (1), après ou au moment de la réception par les moyens de retenue (5), sont amenés dans une position bloquée par un mouvement relatif entre les récipients (1) et les moyens de retenue (5).

7. Procédé selon l'une quelconque des revendications 1 à 6, caractérisé en ce que, dans la zone de transfert (U.2), les récipients (1) sont acheminés vers un moyen d'évacuation (11) qui entre en contact avec la zone du fond des récipients et en ce que les moyens de retenue (5) sont guidés sur une voie courbée vers le haut pour se détacher des récipients (1).

8. Procédé selon la revendication 7, caractérisé en ce que le moyen d'évacuation (11) se déplace à la même vitesse que les récipients (1) transportés vers la zone de transfert (U.2) et en ce que les moyens de retenue (5) pivotent autour d'un axe vertical avant le processus de transfert.

9. Procédé selon la revendication 7, caractérisé en ce que le moyen d'évacuation (11) se déplace à une vitesse supérieure à celle des récipients (1) transportés vers la zone de transfert (U.2) et en ce que les moyens de retenue (5) ne sont évacués vers le haut que lorsque les récipients (1) se sont dégagés de la prise des moyens de retenue (5).

10. Procédé selon la revendication 7, caractérisé en ce que le moyen d'évacuation (11) se déplace à la même vitesse que les récipients (1) transportés vers la zone de transfert (U.2) et en ce que les moyens de retenue (5) sont amenés dans une position hors prise pour le processus de transfert.

11. Procédé selon l'une quelconque des revendications 1 à 10, caractérisé en ce que les récipients (1) sont cadencés avant leur acheminement vers la zone de réception (U.1), lesdits récipients étant amenés d'une vitesse d'admission (v.1) à une vitesse de transport (v) et leur écartement étant en même temps uniformisé.

12. Procédé selon la revendication 11, caractérisé en ce que les récipients (1) au moment de la mise en cadence sont accélérés par une force appliquée sur leur zone avec orifice ou sont ralentis par une force appliquée contre leur zone de fond.

13. Dispositif destiné au transport suspendu de récipients (1), lequel dispositif comprend une pluralité de moyens de retenue (5) et un moyen de transport par lequel les moyens de retenue (5) peuvent être transportés à égale distance l'un de l'autre sur une voie (7') prédéfinie à travers une zone de réception (U.1) et, ensuite, transportés sur une ligne de transport (FS) vers une zone de transfert (U.2), puis écartés de la zone de transfert (U.2), et lequel dispositif est équipé d'un moyen d'amenée (3) des récipients agissant sur la zone du fond des récipients (1) à transporter pour acheminer les récipients (1) sur une voie pour récipients (8) à travers la zone de réception (U.1), caractérisé en ce que la voie (7') prédéfinie, sur laquelle les moyens de retenue (5) peuvent être transportés à travers la zone de réception (U.1), suit une courbe allant du haut en direction de la voie pour récipients (8) et, à l'extrémité de la zone de réception (U.1) débouche tangentiellement vers la voie pour récipients (8), en ce que les moyens de retenue (5) sont acheminés sur la voie courbe à une distance radiale du moyen de transport et/ou peuvent effectuer un pivotement commandé par rapport au moyen de transport dans le sens de transport (F) ou dans le sens inverse du transport, et en ce que le moyen de transport et le moyen d'amenée des récipients (3) peuvent être actionnés à la même vitesse.

14. Dispositif selon la revendication 13, caractérisé en ce que le moyen de transport est une chaîne de transport.

15. Dispositif selon la revendication 13, caractérisé en ce que le moyen de transport est formé par une pluralité d'éléments de transport, qui peuvent être transportés individuellement.

16. Dispositif selon l'une quelconque des revendications 13 à 15, caractérisé en ce que les moyens de retenue (5) sont des fourches (20) à deux bras, qui sont montées contre le moyen de transport par l'intermédiaire d'un assemblage articulé (6).

17. Dispositif selon l'une quelconque des revendications 13 à 15, caractérisé en ce que les moyens de retenue (5) sont des grappins de retenue (40) comprenant des mâchoires (41/42) qui peuvent se déplacer l'une contre l'autre, et en ce que des organes de commande sont prévus au moins dans la zone de réception et dans la zone de transfert pour faire varier la position relative des mâchoires du grappin.

18. Dispositif selon l'une quelconque des revendications 13 à 17, caractérisé en ce qu'il est prévu un moyen d'évacuation des récipients (11) pour évacuer les récipients (1) hors de la zone de transfert (U.2).

19. Dispositif selon l'une quelconque des revendications 13 à 18, caractérisé en ce que ledit dispositif comprend, en plus, des moyens de réglage de la cadence (81/82, 82') montés en amont de la zone de réception (U.1) et destinés à réguler les distances prédéfinies (d) entre les récipients et la vitesse de transport (v) prédéfinie pour l'acheminement des récipients (1) vers la zone de réception (U.1).

20. Dispositif selon la revendication 19, caractérisé en ce que le moyen de réglage de la cadence est formé par une vis de réglage de la cadence (82), qui entre en prise avec la zone de l'orifice des récipients (1) à amener, et par des glissières de guidage (81), la vis de réglage comportant une rainure (84), qui présente une pente croissante en allant de la zone d'entrée (85) de la vis (82) vers sa zone de sortie (86).

21. Dispositif selon la revendication 19, caractérisé en ce que le moyen de réglage de la cadence (82') comporte une pluralité de taquets de réglage de la cadence (30) qui agissent contre la zone du fond des récipients (1) à amener et qui sont disposés à égale distance l'un de l'autre sur une chaîne continue.

22. Dispositif selon l'une quelconque des revendications 13 à 21, caractérisé en ce que le dispositif de retenue (5) est conçu avec un assemblage (6) faisant partie du dispositif et en ce que l'assemblage (6) comporte une articulation (71), le moyen de retenue (5) étant muni de deux bras destinés à entourer un récipient à transporter, lesquels sont disposés sensiblement dans le sens transversal par rapport à l'assemblage (6).

23. Dispositif de retenue selon la revendication 22, caractérisé en ce que les bords intérieurs des bras sont conçus en forme de cône de blocage (21).

24. Dispositif de retenue selon la revendication 22, caractérisé en ce que le moyen de retenue (5) est un grappin de retenue (40) muni de deux mâchoires (41/42) qui peuvent se déplacer l'une contre l'autre, les mâchoires du grappin étant disposées contre l'assemblage (6) de manière à pouvoir tourner et un moyen de synchronisation étant prévu pour la synchronisation de leur mouvement de rotation.

25. Dispositif de retenue avec assemblage selon la revendication 24, caractérisé en ce que le grappin de retenue comporte un levier de commande (50) qui est relié avec les mâchoires du grappin (41 et 42) par des boulons (53 et 54), qui peuvent se déplacer dans des fentes (51 et 52), et qui s'avance en saillie au-dessus des mâchoires du grappin transversalement par rapport au sens de transport (F).

26. Dispositif de retenue selon la revendication 24 ou 25, caractérisé en ce qu'une denture (45) est prévue pour former le moyen de synchronisation.
